# EUROPEAN PATENT SPECIFICATION

(11) **EP 1 634 827 B1**
(45) Date of publication and mention of the grant of the patent: **26.12.2007**
(21) Application number: 05270054.9
(22) Date of filing: 08.09.2005
(51) Int. Cl.: B65G 47/82, B65G 47/52

(54) **Method and device for transferring products**
Verfahren und Vorrichtung zum Überbringen von Produkten
Procédé et dispositif pour transférer des produits

(30) Priority: 09.09.2004 GB 0419944
(43) Date of publication of application: 15.03.2006
(73) Proprietor: Quin Systems Limited, Wokingham, Berkshire RG41 2FD (GB)
(72) Inventor: Webb, Michael, Fleet, Hampshire GU51 4LF (GB)
(74) Representative: Stanley, David William

(56) References cited:
- GB-A- 447 964
- US-A- 2 781 121
- US-A- 4 519 495
- US-A1- 2004 096 362
- US-B1- 6 189 702

## Description

The present invention relates to methods and devices for product handling, and is concerned particularly with transferring products between conveyors - as in, for example, a packaging plant.

When packaging products in groups, it is known to provide a pair of conveyers running side by side. Products are collated into groups on the first conveyer and then transferred in groups to the second conveyer where, desirably, they are placed at predetermined, regular intervals that are often defined by pockets.

In packaging plants, it is of course a common objective for the plant to operate at as high a speed as possible, so that as many products as possible can be packed in a given time. Therefore, in the above example, it is desired to move the collated groups of products from the first conveyer to the second conveyer as rapidly as possible. A typical way of doing this at the present time is to use a pick and place robot. The robot firstly synchronises with the first conveyer to pick up a group of products, transfers the picked group of products to the second conveyer, and then synchronises with the second conveyer in order to place the grouped products on it reliably. The robot then has to return to its starting position in relation to the first conveyer ready to pick up another group of products.

From time to time, it is inevitable that groups of products arrive late on the first conveyer due to upstream delays - for example, rejection of faulty products. In order to transfer the delayed group of products to the second conveyer at the desired regular intervals thereon, it is necessary then for the robot to operate at a very much higher speed, to complete the transfer operation in time. In practice, it is impossible for most robots to operate at a sufficiently increased speed, and the result is a missing group of products on the second conveyer.

Preferred embodiments of the present invention aim to provide methods and devices that may be improved in the foregoing respects.

USP 4,519,495 discloses an apparatus of the type that has an endless, stepwise advanced delivery conveyor on which objects are carried while in a lengthwise contact with one another. The objects are pushed transversely from the delivery conveyor to a continuously advanced removal conveyor which extends at least approximately parallel to the delivery conveyor and which has object carrier members determining the spacing between successive objects on the removal conveyor. A specific objective of the apparatus of USP 4,519,495 is not only to convey substantially rectangular, plate-like objects, but to separate the objects and keep them separate and spaced from one another.

In contrast to this, the present invention is concerned with transferring products in groups and retaining them in groups.

According to one aspect of the present invention, there is provided a method of transferring groups of products between an input conveyor and an output conveyor having a series of compartments at predetermined intervals, each to receive a respective group of products, the method comprising the steps of:
conveying products on the input conveyor at a first speed;
operating the output conveyor at a second speed;
providing at least one transfer station where the input and output conveyors run substantially side by side in the same direction; and
transferring groups of products at the transfer station in a transverse direction from the input conveyor to the output conveyor:
   wherein:
   the groups of products are transferred at the transfer station by a transfer device that engages the groups of products on the input conveyor and pushes the groups of products onto the output conveyor;
   the positions of the groups of products on the input conveyor are detected; and
   movement of said transfer device is controlled in dependence upon the detected positions of the groups of products on the input conveyor and synchronised with the movement of the output conveyor to place the groups of products into said compartments on the output conveyor, such that each said compartment receives either a full group of said products or none of said products.

Preferably, said predetermined intervals are regular intervals.

Said compartments may be of equal dimensions.

Said products may be formed into groups by a gate that is placed intermittently across the input conveyer.

Said transfer device may include a guide that is moveable into the path of the input conveyor, to arrest travelling products, and out of the path of the input conveyor

Said first and second speeds may be different.

More than one transfer station and/or transfer device may be provided

Said transfer device may comprise a sweep device.

Said transfer device may comprise an overhead sweep device.

Said transfer device may comprise an overhead sweep belt.

Said input and/or output conveyor may comprise an endless belt conveyor.

Said input and/or output conveyor may be substantially straight.

Said input and output conveyors may be substantially parallel.

In another aspect, the invention provides a product transfer system arranged to transfer groups of products between input and output conveyors in accordance with a method according to any of the preceding aspects of the invention.

For a better understanding of the invention, and to show how embodiments of the same may be carried into effect, reference will now be made, by way of example, to the accompanying diagrammatic drawings, in which:

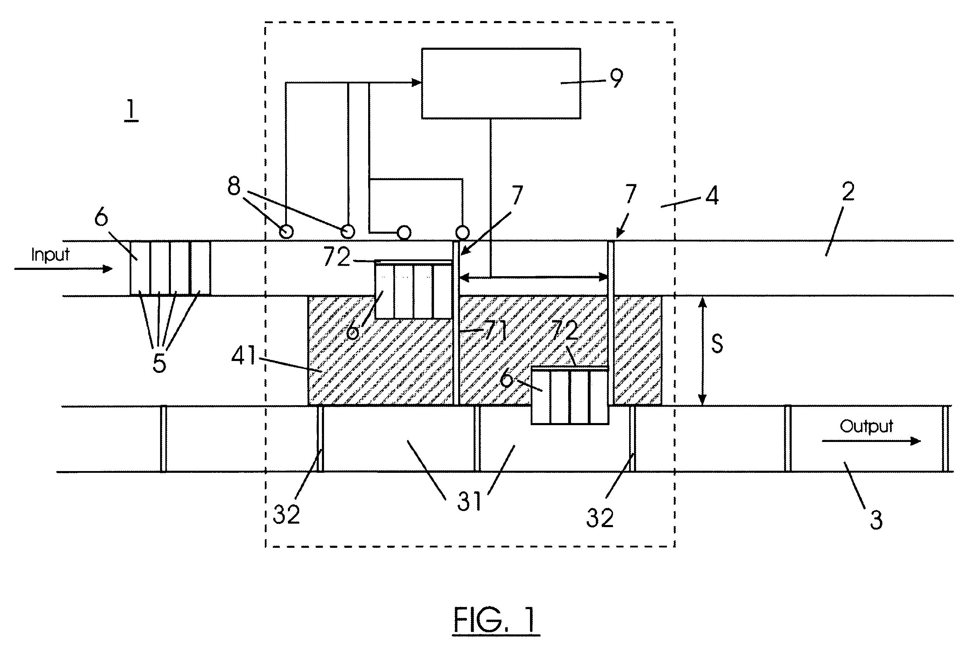

Figure 1 is a schematic view of one example of a product transfer device in accordance with one embodiment of the invention.

The illustrated product transfer device 1 comprises an input conveyer 2 and an output conveyer 3, each of which is in the form of an endless belt conveyer that extends in a straight line. The input conveyer 2 and output conveyer 3 run substantially parallel, side by side in the same direction, and are spaced apart by a distance S. The output conveyer 3 is formed with a series of regularly spaced compartments in the form of pockets 31 of equal size, defined by a series of regularly spaced lugs 32.

A transfer station 4 is provided with a support surface 41 between the input conveyer 2 and output conveyer 3. At the transfer station 4, a pair of transfer devices 7 are provided by overhead sweep belts 71 with downwardly projecting lugs 72. As will be understood by the skilled reader, a sweep device is a device that engages a product to push it or "sweep" it along a desired path - in this case, from one conveyor to another.

In use, products 5 on the input conveyer 2 are formed into groups 6, which are carried along the input conveyer 2 at, theoretically, regular intervals. Just by way of one example of many, the products 5 might be about 100mm long and 35mm wide, with the groups 6 at intervals of approximately 400mm. With the input conveyer 2 moving at a longitudinal speed of around 600mm/sec, the input conveyer 2 has a nominal input rate of about 360 products per minute.

The output conveyer 3 runs at a somewhat slower speed of 420mm/sec, and the pitch of the pockets 31 is approximately 280mm. This gives a nominal output rate of approximately 360 products per minutes to equate more or less with the input rate of the input conveyer 2.

The positions of the product groups 6 on the input conveyer 2 are detected by a series of photo-detectors 8, the outputs of which are fed to a control device 9 to control operation of the sweep devices 7.

As soon as a product group 6 reaches a predetermined position along the input conveyer 2, a respective one of the overhead sweep devices 7 is activated, such that its lug 72 pushes the product group 6 across the support surface 41 of the transfer station 4, and into a respective one of the pockets 31 on the output conveyer 3.

It will be appreciated that, with the product transport rates of approximately 360 products per minute, each of the two sweep devices 7 has to make approximately 45 transfers per minute of a group 6 of four products 5.

So long as the product groups 6 come along the input conveyer 2 at regular intervals, the product transfer device 1 operates in a steady manner. However, from time to time, there will be a delay between product groups 6 on the input conveyer 2. Typically, this may be due to rejection of a faulty product upstream, such that a delay is incurred in putting together a group of four products 5. If one product 5 is rejected, then the next group to come along the input conveyer 2 will be approximately one quarter of a product group pitch out of phase. This means that, when the delayed product group 6 reaches the respective sweep device 7, the sweep device has a significantly less period of time in which to sweep the product group 6 across the transfer station 4 and into the respective output pocket 31. Therefore, the sweep device 7 has to be operated at a significantly higher speed.

If a product group 6 is delayed for too long, the sweep device 7 will eventually be unable to operate at a sufficiently high speed. In that case, its speed of transfer is slowed down to a much reduced speed, such that a respective one of the pockets 31 is left unfilled, and the complete group 6 of four products 5 is transferred into the next available pocket 31.

This mode of operation is particularly important, to ensure that the pockets 31 are either completely full or completely empty. This can be very significant in "flowrap" packaging methods, which are typically adapted to deal satisfactorily with completely full and completely empty wrappers but cannot readily deal with partially filled wrappers.

Preferably, the speed of operation of the sweep devices 7 is adjusted by the controller 9 in response to a look-up table. This determines the speeds at which the sweep devices 7 need to be operated, in dependence upon detected phase lags in the product groups 6 on the input conveyer 2. The controller 9 also controls the rate of change of the speed of the sweep devices 7 accordingly, to regain steady state synchronisation once a constant phase of product groups 6 on the input conveyer 2 is restored.

It will be appreciated by those skilled in the art that a product transfer device 1 as illustrated may be constructed in an extremely economical manner. The transfer devices 7 such as overhead sweep belts can be provided at relatively low cost. Variations in phase of the product group 6 on the input conveyer 2 can readily be detected by cheap photo-detectors 8 connected to relatively simple processing circuitry in the controller 9. In particular, transfer devices 7 such as overhead sweep belts can be made to accelerate, travel and decelerate very quickly and, being of endless belt configuration, require no return cycle. This means that they can operate very much more quickly than the significantly more expensive pick and place robotic devices that are used at the present time.

If the input rate on the input conveyer 2 exceeds the output rate on the output conveyer 3, this is an error condition that is handled by letting products 5 bypass the transfer devices 7.

The products 5 can be collated in groups 6 by any suitable means. For example, a gate may be placed intermittently across the input conveyer 2, and released as soon a group of four products 5 has been collated.

The illustrated product transfer device 1 thus provides a high-speed transfer, with a buffer function to ensure that pockets 31 are either completely full or completely empty. Since the device 1 can accommodate differences in product flow rate on the input conveyor 2, the input conveyor 2 need not be made to a particularly high and expensive configuration. By using photo-detectors also with the output conveyor 3 to synchronise phase with the input conveyor 2, the output conveyor 3 may likewise be made relatively economically.

The conveyors 2 and 3 may be of any desired configuration and spacing, provided that there is a transfer station such as 4 at which product groups may be transferred between the conveyors 2 and 3. The transfer devices 7 may have any suitable form, other than overhead sweep belts. Any desired number of transfer devices 7 may be provided at the transfer station 4.

Typically, the sweep devices 7 may include guides that extend across the input conveyor 2, to arrest travelling product groups 6 so that they may be swept across the transfer station to the output conveyor 3. The guide for the first, leftmost transfer device 7 (as seen in Figure 1) may be of two sections, the first extending across the input conveyor 2 and the second extending across the support surface 41. The first section is moveable out of the path of the input conveyor 2, for example by raising or rotation, to allow product groups 6 to pass when required to the second, rightmost transfer device 7 (as seen in Figure 1). The guide for the second transfer device 7 may also be arranged for movement out of the path of the input conveyor 2, to allow product groups 6 to bypass the transfer devices 7 - in the event of an error condition as mentioned above, for example.

## Claims

1. A method of transferring groups (6) of products (5) between an input conveyor (2) and an output conveyor (3) having a series of compartments (31) at predetermined intervals, each to receive a respective group of products (5), the method comprising the steps of:
conveying products (5) on the input conveyor (2) at a first speed;
operating the output conveyor (3) at a second speed;
providing at least one transfer station (4) where the input and output conveyors (2, 3) run substantially side by side in the same direction; and
transferring groups (6) of products (5) at the transfer station (4) in a transverse direction from the input conveyor (2) to the output conveyor (3):
wherein:
the groups (6) of products (5) are transferred at the transfer station (4) by a transfer device (7) that engages the groups (6) of products (5) on the input conveyor (2) and pushes the groups (6) of products (5) onto the output conveyor (3);
the positions of the groups (6) of products (5) on the input conveyor (2) are detected; and
movement of said transfer device (7) is controlled in dependence upon the detected positions of the groups (6) of products (5) on the input conveyor (2) and synchronised with the movement of the output conveyor (3) to place the groups (6) of products into said compartments (31) on the output conveyor (3), such that each said compartment (31) receives either a full group (6) of said products (5) or none of said products (5).

2. A method according to claim 1, wherein said predetermined intervals are regular intervals.

3. A method according to any claim 1 or 2, wherein said compartments (31) are of equal dimensions.

4. A method according to claim 1, 2 or 3, wherein said products (5) are formed into groups (6) by a gate that is placed intermittently across the input conveyer.

5. A method according to any of the preceding claims, wherein said transfer device (7) includes a guide that is moveable into the path of the input conveyor (2), to arrest travelling products (5), and out of the path of the input conveyor (2)

6. A method according to any of the preceding claims, wherein said first and second speeds are different.

7. A method according to any of the preceding claims, wherein more than one transfer station (4) and/or transfer device (7) is provided

8. A method according to any of the preceding claims, wherein said transfer device (7) comprises a sweep device (71).

9. A method according to claim 8, wherein said transfer device (7) comprises an overhead sweep device (71).

10. A method according to claim 9, wherein said transfer device (7) comprises an overhead sweep belt (71).

11. A method according to any of the preceding claims, wherein said input and/or output conveyor (2, 3) comprises an endless belt conveyor.

12. A method according to any of the preceding claims, wherein said input and/or output conveyor (2, 3) is substantially straight.

13. A method according to any of the preceding claims, wherein said input and output conveyors (2, 3) are substantially parallel.

14. A product transfer system arranged to transfer groups (6) of products (5) between input and output conveyors (2, 3) in accordance with a method according to any of the preceding claims.

## Patentansprüche

1. Verfahren zur Überführen von Gruppen (6) von Produkten (5) zwischen einem Eingangsförderer (2) und einem Ausgangsförderer (3) mit einer Anzahl von Aufteilungen (31) in vorbestimmten Intervallen, welche jeweils zur Aufnahme einer jeweiligen Gruppe von Produkten (5) vorgesehen sind, wobei das Verfahren folgende Schritte umfasst:
Fördern von Produkten (5) auf dem Eingangsförderer (2) mit einer ersten Geschwindigkeit;
Betrieb des Ausgangsförderers (3) bei einer zweiten Geschwindigkeit;
Bereitstellen mindestens einer Überführungsstation (4), in der der Eingangs- und der Ausgangsförderer (2,3) im Wesentlichen Seite an Seite in der gleichen Richtung betrieben werden; und
Überführung von Gruppen (6) von Produkten (5) an der Überführungsstation (4) in einer Querrichtung von dem Eingangsförderer (2) zum Ausgangsförderer (3),
wobei:
die Gruppen (6) von Produkten (5) an der Überführungsstation (4) durch eine Überführungsvorrichtung (7) überführt werden, welche an die Gruppen (6) von Produkten (5) an dem Eingangsförderer (2) ankoppelt und die Gruppen (6) von Produkten (5) auf den Ausgangsförderer (3) drückt;
die Positionen der Gruppen (6) von Produkten (5) auf dem Eingangsförderer (2) erfasst werden; und
die Bewegung der genannten Überführungsvorrichtung (7) in Abhängigkeit von den erfassten Positionen der Gruppen (6) von Produkten (5) auf den Eingangsförderer (2) gesteuert wird und mit der Bewegung des Ausgangsförderers (3) synchronisiert wird, um die Gruppen (6) von Produkten in die genannten Aufteilungen (31) auf dem Ausgangsförderer (3) zu platzieren, so dass jede der genannten Aufteilungen (31) entweder eine vollständige Gruppe (6) der genannten Produkte (5) oder keines der genannten Produkte (5) aufnimmt.

2. Verfahren nach Anspruch 1, wobei die genannten vorbestimmten Intervalle regelmäßige Intervalle sind.

3. Verfahren nach einem der Ansprüche 1 oder 2, wobei die genannten Aufteilungen (31) gleiche Abmessungen aufweisen.

4. Verfahren nach Anspruch 1,2 oder 3, wobei die genannten Produkte (5) durch einen Schieber in Gruppen (6) zusammengefasst werden, der intermittierend über den Eingangsförderer platziert wird.

5. Verfahren nach einem der vorangehenden Ansprüche, wobei die genannte Überführungsvorrichtung (7) eine Führung umfasst, die in den Pfad des Eingangsförderers (2) bewegbar ist, um mitlaufende Produkte (5) anzuhalten, und die aus dem Pfad des Eingangsförderers (2) heraus bewegbar ist.

6. Verfahren nach einem der vorangehenden Ansprüche, wobei die genannten ersten und zweiten Geschwindigkeiten unterschiedlich sind.

7. Verfahren nach einem der vorangehenden Ansprüche, wobei mehr als eine Überführungsstation (4) und/oder Überführungsvorrichtung (7) vorhanden ist.

8. Verfahren nach einem der vorangehenden Ansprüche, wobei die genannte Überführungsvorrichtung (7) eine Mitnehmervorrichtung (71) umfasst.

9. Verfahren nach Anspruch 8, wobei die genannte Überführungsvorrichtung (7) eine hoch liegende Mitnehmervorrichtung (71) umfasst.

10. Verfahren nach Anspruch 9, wobei die genannte Überführungsvorrichtung (7) ein hoch liegendes Mitnehmerband (71) umfasst.

11. Verfahren nach einem der vorangehenden Ansprüche, wobei der genannte Eingang- und/oder Ausgangsförderer (2,3) einen Endlos-Bandförderer umfasst.

12. Verfahren nach einem der vorangehenden Ansprüche, wobei der genannte Eingangs- und/oder Ausgangsförderer (2,3) im Wesentlichen gerade ist.

13. Verfahren nach einem der vorangehenden Ansprüche, wobei die genannten Eingangs- und Ausgangsförderer (2,3) im Wesentlichen parallel sind.

14. Produkt-Überführungssystem, welches zur Überführung von Gruppen (6) von Produkten (5) zwischen Eingangs- und Ausgangsförderern (2,3) gemäß einem Verfahren nach einem der vorangehenden Ansprüche eingerichtet ist.

## Revendications

1. Procédé pour le transfert de groupes (6) de produits (5) entre un convoyeur d'entrée (2) et un convoyeur de sortie (3) présentant une série de compartiments (31) à des intervalles prédéterminés, chacun pour recevoir un groupe respectif de produits (5), le procédé comprenant les étapes de :
convoyer les produits (5) sur le convoyeur d'entrée (2) à une première vitesse ;
actionner le convoyeur de sortie (3) à une seconde vitesse ;
prévoir au moins une station de transfert (4) où les convoyeurs (2, 3) d'entrée et de sortie avancent sensiblement côte à côte dans la même direction; et
transférer des groupes (6) de produits (5) vers la station de transfert (4) dans une direction transversale à partir de convoyeur d'entrée vers le convoyeur de sortie (3) ;
**caractérisé en ce que** :
les groupes (6) de produits (5) sont transférés vers la station de transfert (4) par un dispositif de transfert (7) qui engage les produits (5) sur le convoyeur d'entrée (2) et pousse les groupes de produits (5) sur le convoyeur (3) de sortie ;
les positions des groupes (6) des produits (5) sur le convoyeur d'entrée (2) sont détectées ; et
le mouvement dudit dispositif de transfert (7) est contrôlé en fonction des positions détectées des groupes (6) de produits (5) sur le convoyeur d'entrée (2) et synchronisé avec le mouvement du convoyeur de sortie (3) pour placer les groupes de produits dans lesdits compartiments (31) sur le convoyeur de sortie (3) de façon que chaque compartiment (31) reçoive soit un groupe complet (6) desdits produits, soit aucun desdits produits (5).

2. Procédé selon la revendication 1, **caractérisé en ce que** lesdits intervalles prédéterminés sont des intervalles réguliers.

3. Procédé selon l'une des revendications 1 ou 2, **caractérisé en ce que** lesdits compartiments (31) sont de dimensions égales.

4. Procédé selon l'une des revendications 1, 2 ou 3, **caractérisé en ce que** lesdits produits sont formés en groupes (6) par une porte placée de façon intermittente au travers du convoyeur d'entrée.

5. Procédé selon l'une des revendications précédentes, **caractérisé en ce que** le dispositif de transfert (7) inclut un guide déplaçable dans le chemin du convoyeur (2) d'entrée pour arrêter les produits en déplacement (5), et hors du chemin du convoyeur d'entrée (2).

6. Procédé selon l'une des revendications précédentes, **caractérisé en ce que** lesdites première et seconde vitesses sont différentes.

7. Procédé selon l'une des revendications précédentes, **caractérisé en ce que** plus d'une station de transfert et/ou plus d'un dispositif de transfert (7) sont prévus.

8. Procédé selon l'une des revendications précédentes, **caractérisé en ce que** ledit dispositif de transfert (7) comporte un dispositif de balayage (71).

9. Procédé selon la revendication 8, **caractérisé en ce que** ledit dispositif de transfert (7) comporte un dispositif de balayage (71) à la verticale.

10. Procédé selon la revendication 9, **caractérisé en ce que** ledit dispositif de transfert (7) comporte une courroie de balayage (71) à la verticale.

11. Procédé selon l'une des revendications précédentes, **caractérisé en ce que** ledit convoyeur (2, 3) d'entrée et/ou de sortie comporte un convoyeur à courroie sans fin.

12. Procédé selon l'une des revendications précédentes, **caractérisé en ce que** ledit convoyeur (2, 3) d'entrée et/ou de sortie est sensiblement droit.

13. Procédé selon l'une des revendications précédentes, **caractérisé en ce que** lesdits convoyeurs (2, 3) d'entrée et/ou de sortie sont sensiblement parallèles.

14. Système de transfert de produits conçu pour transférer des groupes (6) de produits (5) entre des convoyeurs d'entrée et de sortie (2, 3) selon un procédé conforme à l'une des revendications précédentes.
